(19) Europäisches Patentamt
European Patent Office
Office européen des brevets

(11) EP 4 542 662 A1

(12) **EUROPEAN PATENT APPLICATION**

(43) Date of publication:
**23.04.2025 Bulletin 2025/17**

(21) Application number: **24198869.0**

(22) Date of filing: **06.09.2024**

(51) International Patent Classification (IPC):
*H01M 4/04* (2006.01)  *H01M 4/139* (2010.01)
*B30B 3/04* (2006.01)

(52) Cooperative Patent Classification (CPC):
**H01M 4/0409; B30B 3/04; H01M 4/0404;
H01M 4/0435; H01M 4/139**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **19.10.2023 KR 20230140344**

(71) Applicant: **SAMSUNG SDI CO., LTD.
Giheung-gu
Yongin-si, Gyeonggi-do
17084 (KR)**

(72) Inventors:
• **KIM, Gisung
17084 Yongin-si (KR)**

• **SEO, Wonsub
17084 Yongin-si (KR)**
• **LEE, Dongsub
17084 Yongin-si (KR)**
• **PYO, Young-Hak
17084 Yongin-si (KR)**
• **PARK, Jin Seo
17084 Yongin-si (KR)**
• **CHOI, Kyungtaek
17084 Yongin-si (KR)**
• **PARK, Joonkoo
17084 Yongin-si (KR)**
• **KIM, Sohun
17084 Yongin-si (KR)**

(74) Representative: **Marks & Clerk LLP
15 Fetter Lane
London EC4A 1BW (GB)**

(54) **METHOD AND APPARATUS FOR CONTROLLING SHEET THICKNESS IN ELECTRODE PLATE MANUFACTURING PROCESS**

(57) A method for controlling a sheet thickness in an electrode plate manufacturing process, which is performed by at least one processor, includes obtaining a thickness measured for each of a plurality of portions of a sheet rolled through a plurality of rollers, calculating, based on the obtained thickness for each of the plurality of portions, a dispersion for the sheet thickness, determining, based on the calculated dispersion, movement information of at least one target roller from the plurality of rollers, and controlling the at least one target roller to be moved based on the determined movement information.

FIG. 1

EP 4 542 662 A1

**Description**

BACKGROUND

1. Field

Aspects of embodiments of the present disclosure relate to method and apparatus for controlling a sheet thickness in electrode plate manufacturing process.

2. Description of the Related Art

Unlike primary batteries that are not designed to be (re)charged, secondary (or rechargeable) batteries are batteries that are designed to be discharged and recharged. Low-capacity secondary batteries may be used in portable, small electronic devices, such as smart phones, feature phones, notebook computers, digital cameras, and camcorders, while large-capacity secondary batteries may be used as power sources for driving motors in hybrid vehicles and electric vehicles and for storing power.

The above information disclosed in this Background section is for enhancement of understanding of the background of the present disclosure, and therefore, it may contain information that does not constitute related (or prior) art.

SUMMARY

The following aspects and features of the present disclosure will be described in or will be apparent from the following description of embodiments of the present disclosure.

Aspects of embodiments provide a method for controlling a sheet thickness in an electrode plate manufacturing process, which is performed by at least one processor, the method including obtaining a thickness measured for each of a plurality of portions of a sheet rolled through a plurality of rollers; calculating, based on the obtained thickness for each of the plurality of portions, a dispersion for the sheet thickness; determining, based on the calculated dispersion, movement information of at least one target roller from the plurality of rollers; and controlling the at least one target roller to be moved based on the determined movement information.

Further, the movement information may include an amount of movement and a direction of movement of the at least one target roller, and the controlling of the at least one target roller to be moved may include controlling the at least one target roller to be moved by the amount of movement in the direction of movement that are included in the movement information.

Further, the determining of the movement information may include determining the direction of movement of the at least one target roller to be a first direction in response to a case where the calculated dispersion falls in a first range, and determining the direction of movement of the at least one target roller to be a second direction in response to a case where the calculated dispersion falls in a second range.

Further, the first direction may be a direction toward a position where a fixed roller among the plurality of rollers is located, and the second direction may be a direction away from the position where the fixed roller is located.

Further, the method described above may further include determining at least one roller of the plurality of rollers as the at least one target roller such that the at least one roller excludes a fixed roller among the plurality of rollers.

Further, the at least one roller determined as the at least one target roller may include a first roller spaced apart from the fixed roller by a first distance and a second roller spaced apart from the fixed roller by a second distance that is greater than the first distance, and the controlling of the at least one target roller to be moved may include controlling the first roller to be moved first, and controlling the second roller to be moved subsequently based on the determined movement information.

Further, the at least one roller determined as the at least one target roller may include a first roller spaced apart from the fixed roller by a first distance and a second roller spaced apart from the fixed roller by a second distance that is greater than the first distance, and the controlling of the at least one target roller to be moved may include controlling the first roller and the second roller to be moved together based on the determined movement information.

Further, the method described above may further include, after the controlling of the at least one target roller to be moved is performed, re-obtaining a thickness measured for each of a plurality of portions of a sheet rolled through the plurality of rollers; recalculating, based on the re-obtained thickness for each of the plurality of portions, a dispersion for the sheet thickness; identifying a pair of rollers that have the most influence on generating a difference in thickness between a first portion of the sheet and a second portion of the sheet in response to a case where the dispersion falls outside a threshold range; and controlling movement of at least one of the identified pair of rollers.

Further, the method described above may further include identifying a pair of rollers that have the most influence on generating a difference in thickness between a first portion of the sheet and a second portion of the sheet in response to a case where the dispersion falls outside a threshold range; and determining the at least one target roller to include at least one of the identified pair of rollers.

Further, the determining of the at least one target roller may include determining the at least one target roller to include at least one roller located in a second direction relative to a space between the identified pair of rollers. Here, the second direction may be a direction away from a position where a fixed roller among the plurality of rollers is located.

Further, the obtaining of the thickness measured for each of the plurality of portions of the sheet may include measuring a third distance between a distance measurement sensor and a roller serving as a distance measurement target through the distance measurement sensor; measuring a fourth distance between the distance measurement sensor and a particular portion of the sheet placed on a surface of the roller serving as the distance measurement target through the distance measurement sensor; and obtaining a thickness of the particular portion of the sheet based on the third distance and the fourth distance.

Further, the obtaining of the thickness measured for each of the plurality of portions of the sheet may include measuring a fifth distance between a distance measurement sensor and a substrate serving as a distance measurement target through the distance measurement sensor; measuring a sixth distance between the distance measurement sensor and a particular portion of the sheet placed on a surface of the substrate through the distance measurement sensor; and obtaining a thickness of the particular portion of the sheet based on the fifth distance and the sixth distance.

Further, the calculating of the dispersion for the sheet thickness may include calculating an average thickness of the obtained thicknesses of the plurality of portions; calculating a difference in thickness between a first portion and a second portion among the obtained thicknesses of the plurality of portions; and calculating the dispersion for the sheet thickness based on the calculated average thickness, the difference in thickness, and a predetermined target thickness.

Further, the method described above may further include, before the obtaining the thickness measured for each of the plurality of portions is performed, obtaining a thickness measured for the sheet; calculating a difference between the obtained thickness of the sheet and a predetermined reference thickness of the sheet; and determining a thickness correction value based on the calculated difference. Further, the obtaining of the thickness measured for each of the plurality of portions may include correcting at least one of the thicknesses measured for the plurality of portions based on the thickness correction value.

Further, the method described above may further include, before the obtaining the thickness measured for each of the plurality of portions is performed, obtaining a thickness measured for the sheet and a thickness measured for an electrode plate having a substrate; calculating a difference between the obtained thickness of the electrode plate and a predetermined reference thickness of the electrode plate; and determining a thickness correction value based on the calculated difference. Further, the obtaining of the thickness measured for each of the plurality of portions may include correcting at least one of the thicknesses measured for the plurality of portions based on the thickness correction value.

According to aspects of embodiments of the present disclosure, there may be provided a non-transitory computer-readable storage medium that stores therein instructions that, if executed by a computer, causing the computer to perform the method described above.

Aspects of embodiments provide a control apparatus for controlling a sheet thickness in an electrode plate manufacturing process, the control apparatus including a memory; and at least one processor connected to the memory and configured to execute at least one computer-readable program stored in the memory. Further, the at least one computer-readable program includes instructions, if executed by the at least one processor, to perform operations of: obtaining a thickness measured for each of a plurality of portions of a sheet rolled through a plurality of rollers; calculating, based on the obtained thickness for each of the plurality of portions, a dispersion for the sheet thickness; determining, based on the calculated dispersion, movement information of at least one target roller from the plurality of rollers; and controlling the at least one target roller to be moved based on the determined movement information.

However, aspects and features of the present disclosure are not limited to those described above, and other aspects and features not mentioned will be clearly understood by a person skilled in the art from the detailed description, described below.

At least some of the above and other features of the invention are set out in the claims.

BRIEF DESCRIPTION OF DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:

FIG. 1 is a schematic diagram of a dry electrode process according to an embodiment of the present disclosure.
FIG. 2 is an example diagram for explaining that a thickness of a sheet is measured based on a distance according to an embodiment of the present disclosure.

FIG. 3 is a schematic diagram of a dry electrode process according to another embodiment of the present disclosure.

FIG. 4 is an example diagram for explaining the measuring of a thickness of a sheet based on a distance according to another embodiment of the present disclosure.

FIG. 5 is an example diagram illustrating a state in which three sensors are arranged according to an embodiment of the present disclosure.

FIG. 6 is a block diagram illustrating a control apparatus according to an embodiment of the present disclosure.

FIG. 7 is a flowchart illustrating a method for generating a correction value according to an embodiment of the present disclosure.

FIG. 8 is a flowchart illustrating a method for controlling a thickness of a sheet in an electrode plate manufacturing process according to an embodiment of the present disclosure.

FIG. 9 is an example diagram showing a state of rollers that are moved in a first direction based on a dispersion according to an embodiment of the present disclosure.

FIG. 10 is an example diagram showing a state of a first roller that is moved based on a recalculated dispersion according to an embodiment of the present disclosure.

FIG. 11 is an example diagram showing a state in which rollers are moved in a second direction according to a dispersion according to an embodiment of the present disclosure.

FIG. 12 is an example diagram showing a state of a first roller that is moved again based on a recalculated dispersion according to an embodiment of the present disclosure.

FIG. 13 is an example diagram for explaining a method of determining a target roller according to an embodiment of the present disclosure.

## DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of 35 U.S.C. § 112(a) and 35 U.S.C. § 132(a).

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

In addition, as used in the specification, the term "part", "module" or "unit" refers to a software or hardware component that operates to perform one or more functions. However, the "part", "module" or "unit" is not limited to software or hardware. The "part", "module" or "unit" may be configured to reside on an addressable storage medium or to drive one or more processors. Therefore, as an example, a "part", "module" or a "unit" may include at least one of the following: components such as software components, object-oriented software components, class components, and task components; processes; functions; properties; procedures; subroutines; segments of program code; drivers; firmware; microcode; circuits; data; databases; data structures; tables; arrays; or variables. The functionalities provided by components and "parts", "modules" or "units" may be combined with small numbers of components and "parts", "modules" or "units" or further separated into additional components and "parts", "modules" or "units".

In the present disclosure, "each of a plurality of A" may refer to each of all components included in the plurality of A or may refer to each of some components included in the plurality of A.

Hereinafter, various embodiments of the present disclosure will be described in detail with reference to accompanying drawings.

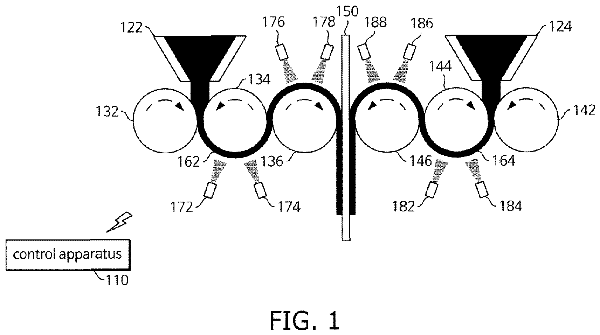

FIG. 1 is a schematic diagram of a dry electrode process according to an embodiment of the present disclosure. As illustrated in FIG. 1, a first powder pocket 122, a plurality of sensors 172, 174, 176, and 178, and a plurality of rollers 132, 134, and 136 may be implemented in the dry electrode process to manufacture a first sheet 162. Additionally, a second powder pocket 124, a plurality of sensors 182, 184, 186, and 188, and a plurality of rollers 142, 144, and 146 may be implemented in the dry electrode process to manufacture a second sheet 164. While six rollers are illustrated in FIG. 1, the number of rollers used in the dry electrode process may be determined based on at least one of the lengths of the target sheets 162 and 164, the thicknesses of the target sheets 162 and 164, or the amount of powder discharged from each of the first and second powder pockets 122 and 124.

In an embodiment, various materials for manufacturing the first sheet 162 may be mixed and introduced into the first powder pocket 122 in powder form. For example, active materials, conductive agents, and the like may be mixed and accommodated in the first powder pocket 122. Similarly, various materials for manufacturing the second sheet 164 may be mixed and introduced into the second powder pocket 124 in powder form. For example, active materials, conductive agents, and the like may be mixed and accommodated in the second powder pocket 124. Here, the first sheet 162 may be an anode sheet and the second sheet 164 may be a cathode sheet. Conversely, the first sheet 162 may be the cathode sheet and the second sheet 164 may be the anode sheet.

Among the plurality of rollers 132, 134, 136, 142, 144, and 146, some of the plurality of rollers (e.g., the rollers 136 and 146) may be fixed rollers that are not movable and some of the plurality of rollers (e.g., the rollers 132, 134, 142, and 144) may be movable rollers. The fixed rollers 136 and 146 are the rollers that are placed adjacent to a substrate 150 and may serve as lamination rollers. Each of the rollers 132, 134, 136, 142, 144, and 146 may be rotated clockwise or counterclockwise. By this rotational force, the powder material and/or the first and second sheets 162 and 164 may be rolled. For example, as shown in FIG. 1, material in powder form supplied from the first powder pocket 122 may be first rolled through the first roller 132 and the second roller 134 to form the first sheet 162. Then, the first sheet 162 may be rolled through the second roller 134 and the third roller 136, and then rolled and adhered onto one surface of the substrate 150 through the third roller 136. Similarly, material in powder form supplied from the second powder pocket 124 may be first rolled through the fourth roller 142 and the fifth roller 144 to form the second sheet 164. Then, the second sheet 164 may be rolled through the fifth roller 144 and the sixth roller 146, and then rolled and attached onto the other surface of the substrate 150 through the sixth roller 146.

Through these multiple rolling processes, each of the first sheet 162 and the second sheet 164 may be formed to have the desired thickness and attached onto the substrate 150.

However, the thickness of each of the first and second sheets 162 and 164 attached onto the substrate 150 may not be uniform or may not meet a target value. In an embodiment, a control apparatus 110 may calculate the dispersion (scatter) of the thickness of each of the first sheet 162 and the second sheet 164. Based on the calculated dispersion, the control apparatus 110 may generate and determine movement information for at least one target roller to be moved. Here, the dispersion indicates the extent of non-uniformity (scattering) of the thickness of each of the first and second sheets 162 and 164 and may be expressed numerically. A method for calculating the thickness will be described later with reference to an equation 1 below. Further, the movement information may include a direction of movement and an amount of movement of the at least one target roller.

In an embodiment, the control apparatus 110 may determine the amount and direction of movement included in the movement information and control the movement of at least one target roller based on the determined amount and direction of movement.

Each of the plurality of moveable rollers 132, 134, 142, and 144 may be moveable in a first direction and/or a second direction. Each of the plurality of moveable rollers 132, 134, 142, and 144 may communicate with the control apparatus 110 and receive control instructions from the control apparatus 110. For example, the rollers 132, 134, 142, and 144 may receive a movement instruction from the control apparatus 110, and the rollers 132, 134, 142, and 144 may be moved in a specified direction and position based on a direction and an amount of movement included in the movement instruction. In another example, one or more moving members for moving the rollers 132, 134, 142, and 144 may be coupled to the rollers 132, 134, 142, and 144, and the control apparatus 110 may control the individual movement of the rollers 132, 134, 142, and 144 by moving the movement members in the first direction or the second direction. For example, a plurality of moving members may be coupled to upper or lower parts of the rollers 132, 134, 142, and 144, and the control apparatus 110 may control the movement of the rollers 132, 134, 142, and 144 by moving at least one of the moving members in the first direction or the second direction. Here, the first direction may be a direction toward a position where the fixed roller 136 or 146 is located, and the second direction may be a direction away from the position where the fixed roller 136 or 146 is located. That is, the first direction is a direction toward the fixed roller 136 from the roller 132 or a direction toward the fixed roller 146 from the roller 142, and the second direction is a direction toward the roller 132 from the fixed roller 136 or a direction toward the roller 142 from the fixed roller 146.

In order to measure the dispersion of the sheet thickness, a plurality of sensors 172, 174, 176, 178, 182, 184, 186, and 188 for measuring the thickness of each of a plurality of portions of each of the first and second the sheets 162 and 164 may be disposed at various locations. The sensors 172, 174, 176, 178, 182, 184, 186, and 188 may acquire sensing data related to the thicknesses of the plurality of portions of the first and second sheets 162 and 164 placed on surfaces of the rollers 134, 136, 144, and 146. For example, sensing data may be obtained for the thicknesses of portions of the left region on each of the first and second sheets 162 and 164 placed on the surfaces of the corresponding rollers 134, 136, 144 and 146, and sensing data may be obtained for the thicknesses of portions of the right region on each of the first and second sheets 162 and 164 placed on the surfaces of the corresponding roller 134, 136, 144, and 146. As another example, sensing data may be obtained for the thicknesses of portions of the left region or the right region on each of the first and second sheets 162 and 164 placed on the surfaces of the corresponding rollers 134, 136, 144 and 146, and sensing data may be obtained for the thicknesses of portions of the central region on each of the first and second sheets 162 and 164.

For example, as illustrated in FIG. 1, the first sensor 172 and the second sensor 174 may be arranged to measure the thickness of the first sheet 162 placed on the surface of the second roller 134, and the third sensor 176 and the fourth sensor 178 may be arranged to measure the thickness of the first sheet 162 placed on the surface of the third roller 136. Similarly, as illustrated in FIG. 1, the fifth sensor 182 and the sixth sensor 184 may be arranged to measure the thickness of the second sheet 164 placed on the surface of the fifth roller 144, and the seventh sensor 186 and the eighth sensor 188 may be arranged to measure the thickness of the second sheet 164 placed on the surface of the sixth roller 146. In another example, only one sensor or three or more sensors may be arranged to measure the thicknesses of each of the first and second sheets placed on the surface of each corresponding roller.

Various sensors capable of measuring the thicknesses of the first and second sheets 162 and 164 may be implemented in the electrode plate manufacturing process. For example, the sensors 172, 174, 176, 178, 182, 184, 186, and 188 may include distance measurement sensors, vision sensors, X-ray thickness measurement sensors, radiation thickness measurement sensors, and the like.

The control apparatus 110 may communicate with each of the plurality of sensors 172, 174, 176, 178, 182, 184, 186, and 188 through wired and/or wireless connection to receive sensing data from each of the plurality of sensors 172, 174, 176, 178, 182, 184, 186, and 188 in real time. The multiple sensing data received from the first to fourth sensors 172, 174, 176, and 178 may relate to thicknesses of a plurality of portions of the first sheet 162, and the multiple sensing data received from the fifth to eighth sensors 182, 184, 186, and 188 may relate to thicknesses of a plurality of portions of the second sheet 164. In an embodiment, based on the received sensing data, the control apparatus 110 may calculate a first dispersion for the thickness of the first sheet 162 and a second dispersion for the thickness of the second sheet 164.

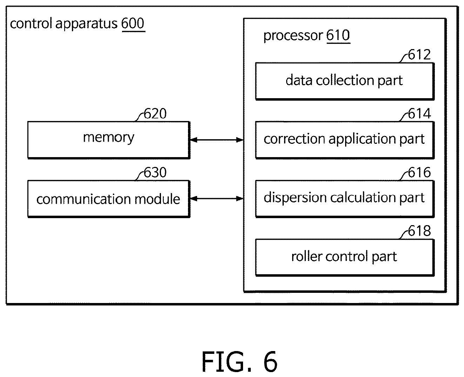

The control apparatus 110 may determine whether the first dispersion does not fall within a predetermined threshold range. If the first dispersion does not fall within the predetermined threshold range, the control apparatus 110 may determine movement information for at least one target roller to control the thickness of the first sheet 162. In an embodiment, the control apparatus 110 may determine at least one target roller to be moved from the movable rollers 132 and 134 that are used to produce the first sheet 162, and the control apparatus 110 may control the at least one target roller to be moved based on the direction and amount of movement included in the movement information. Further, the control apparatus 110 may determine movement information for at least one target roller if the second dispersion does not fall within a predetermined threshold range. Similarly, the control apparatus 110 may determine at least one target roller to be moved from the movable rollers 142 and 144 that are used to produce the second sheet 164, and the control apparatus 110 may control the at least one target roller to be moved based on the direction and amount of movement included in the movement information. Various methods for determining the movement information, including the amount of movement and the direction of movement of at least one target roller, will be described below with reference to FIGS. 6 to 13.

For example, the sensors 172, 174, 176, 178, 182, 184, 186, and 188 may be distance measurement sensors. In such a case, based on the distances between the sensors 172, 174, 176, 178, 182, 184, 186, and 188 and the rollers 134, 136, 144, and 146, and the distances between the sensors 172, 174, 176 178, 182, 184, 186, and 188 and the first and second sheets 162 and 164, the thickness of particular portions of the first and second sheet 162 and 164 may be measured.

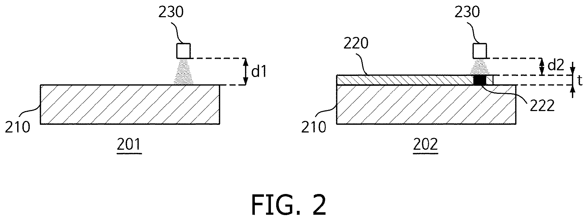

FIG. 2 is an example diagram for explaining measurement of a thickness of a sheet based on a distance according to an embodiment of the present disclosure. A sensor 230 in FIG. 2 may be a sensor that measures a distance based on light rays, e.g., a laser.

For example, referring to a first example 201 of FIG. 2, a first distance d1 (where d1 is a positive real number) between the sensor 230 and a roller 210 (that is a distance measurement target) may be measured using the sensor 230. For example, the first distance d1 between the roller 210 and the sensor 230 may be measured without any material placed on a surface of the roller 210.

Further, referring to a second example 202 of FIG. 2, in a state where a sheet 220 is placed on the surface of the roller 210, a second distance d2 (where d2 is a positive real number) between the sensor 230 and a particular portion 222 of the sheet 220 placed on the surface of the roller 210 may be measured using the sensor 230. Based on the first distance d1 and the second distance d2, a thickness t (where t is a positive real number) of the particular portion 222 of the sheet 220 may be measured. For example, a control apparatus (e.g., the control apparatus 110 in FIG. 1) may calculate or determine that the difference between the first distance d1 and the second distance d2 equals the thickness t of the particular portion 222 of the sheet 220.

For example, the sensors may be disposed at positions near one surface of the substrate and positions near the other surface of the substrate. For example, the sensors may be disposed at positions adjacent (e.g., facing) each of opposite surfaces of the substrate to measure the thickness of the sheets thereon.

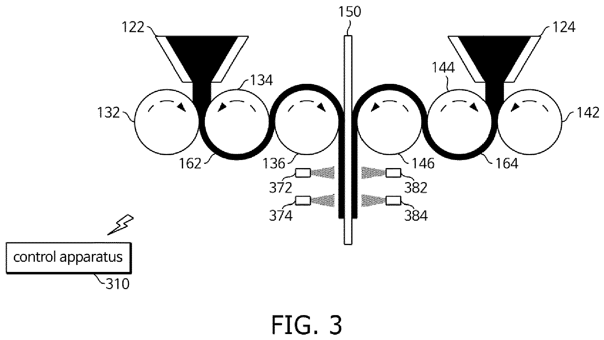

FIG. 3 is a schematic diagram of a dry electrode process according to another embodiment of the present disclosure. In comparison with FIG. 1, the positions of sensors 372, 374, 382, and 384 shown in FIG. 3 are different from the positions of the sensors shown in FIG. 1.

Referring to FIG. 3, in order to measure the dispersion of the sheet thickness, a plurality of sensors 372, 374, 382, and 384 for measuring the thicknesses of respective portions of the first and second sheets 162 and 164 may be disposed at various locations. For example, as illustrated in FIG. 3, the first and second sensors 372 and 374 may be arranged to face one surface (e.g., a first surface) of the substrate 150 and to measure a plurality of portions of the first sheet 162 placed on the first surface of the substrate 150 (e.g., the first and second sensors 372 and 374 may be spaced apart from each other along a length of the substrate 150 and may face a same surface of the substrate 150). Similarly, as further illustrated in FIG. 3, the third and fourth sensors 382 and 384 may be arranged to face another surface (e.g., a second surface) of the substrate 150 and to measure a plurality of portions of the second sheet 164 placed on the second surface of the substrate 150 (e.g., the third and fourth sensors 382 and 384 may be spaced apart from each other along a length of the substrate 150 and may face a same surface of the substrate 150 that is opposite to the surface faced by the first and second sensors 372 and 374).

The first sensor 372 may acquire sensing data related to a thickness at a first portion of the first sheet 162 placed on the first surface of the substrate 150, and the second sensor 374 may acquire sensing data related to a thickness at a second portion of the first sheet 162 placed on the first surface of the substrate 150. Similarly, the third sensor 382 may acquire sensing data related to a thickness at a first portion of the second sheet 164 placed on the second surface of the substrate 150, and the fourth sensor 430 may acquire sensing data related to a thickness at a second portion of the second sheet 164 placed on the second surface of the substrate 150.

A control apparatus 310 may communicate with each of the plurality of sensors 372, 374, 382, and 384 through wired or wireless connection to receive sensing data from each of the plurality of sensors 372, 374, 382, and 384 in real time. In an embodiment, based on the received sensing data, the control apparatus 310 may calculate a first dispersion for the thickness of the first sheet 162 and a second dispersion for the thickness of the second sheet 164. Further, based on the first dispersion and/or the second dispersion, the control apparatus 310 may determine movement information for at least one target roller, and the control apparatus 310 may control the target roller to be moved based on the movement information. The control apparatus 310 shown in FIG. 3 may be the same apparatus as the control apparatus 110 shown in FIG. 1. Alternatively, the control apparatus 310 shown in FIG. 3 may be a different apparatus from the control apparatus 110 shown in FIG. 1.

In some embodiments, the plurality of sensors 172, 174, 176, 178, 182, 184, 186, and 188 shown in FIG. 1 and the plurality of sensors 372, 374, 382, and 384 shown in FIG. 3 may be used together in the electrode plate manufacturing process. That is, in order to more accurately measure the dispersion of the sheet thickness, the plurality of sensors 172, 174, 176, 178, 182, 184, 186, and 188 for measuring the thickness of the sheet on the roller before being attached onto the substrate 150 and the plurality of sensors 372, 374, 382, and 384 for measuring the thickness of the sheet attached onto the substrate 150 may be used together.

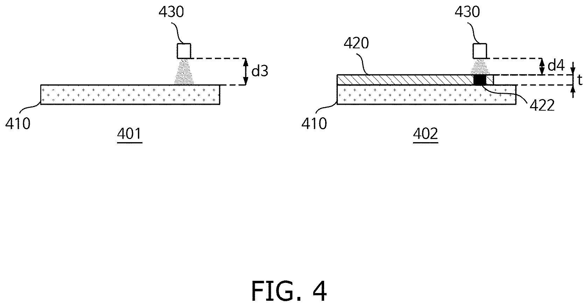

FIG. 4 is an example diagram for explaining the measuring of a thickness of a sheet based on a distance according to another embodiment of the present disclosure. The sensor 430 shown in FIG. 4 may be a sensor that measures a distance based on light rays, e.g., a laser.

For example, referring to a first example 401 of FIG. 4, a third distance d3 (where d3 is a positive real number) between the sensor 430 and a particular portion of a substrate 410 (that is a distance measurement target) may be measured using the sensor 430. For example, the third distance d3 between the substrate 410 and the sensor 430 may be measured in a state where no sheet is attached onto the substrate 410.

Further, referring to a second example 402 of FIG. 4, in a state where a sheet 420 is attached onto one surface of the substrate 410, a fourth distance d4 (where d4 is a positive real number) between the sensor 430 and a particular portion 422 of the sheet 420 attached onto the substrate 410. Based on the measured third distance d3 and the measured fourth distance d4, a thickness at the particular portion 422 of the sheet 420 may be measured. For example, a control apparatus (e.g., the control apparatus 310 shown in FIG. 3) may calculate or determine that the difference t (where t is a positive real number) between the third distance d3 and the fourth distance d4 is the thickness of the particular portion 422 of the sheet 420.

In some embodiments, three or more sensors may be arranged with respect to the part of the roller and the substrate to measure a plurality of portions of three or more regions including the left region, the central region, and the right region on the sheet.

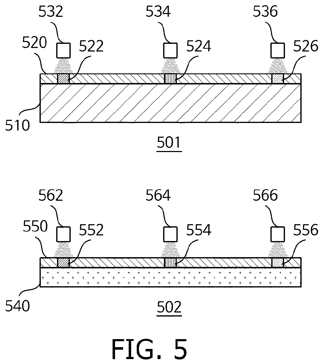

FIG. 5 is an example diagram illustrating a state in which three sensors are arranged according to an embodiment of the present disclosure. Referring to a first example 501 of FIG. 5, a first sensor 532 for measuring a thickness at a portion 522 of the left region on a sheet 520 placed on a surface of a roller 510, a second sensor 534 for measuring a thickness at a portion 524 of the central region on the sheet 520 placed on the surface of the roller 510, and a third sensor 536 for measuring a thickness at a portion 526 of the right regions on the sheet 520 placed on the surface of the roller 510 may be arranged. As for the example of FIG. 1, three sensors may be arranged with respect to each of the plurality of rollers 134, 136, 144, and 146. By using the plurality of sensors 532, 534, and 536, the thickness at the portion 522 of the left region on the sheet 520, the thickness at the portion 524 of the central region on the sheet 520, and the thickness at the portion 526 of the right region on the sheet 520 may be measured.

Referring to a second example 502 of FIG. 5, a fourth sensor 562 for measuring a thickness at a portion 552 of the left region on a sheet 550 attached onto one surface of a substrate 540, a fifth sensor 564 for measuring a thickness at a portion 554 of the central region on the sheet 550 attached onto one surface of the substrate 540, and a sixth sensor 566 for measuring a thickness at a portion 556 of the right regions on the sheet 550 attached onto one surface of the substrate 540 may be arranged. As for the example of FIG. 3, three sensors may be arranged to measure thicknesses of portions of the left region, the right region, and the central region on the first sheet 162 attached onto one surface of the substrate 150. Additionally or alternatively, three sensors may be arranged to measure thicknesses of portions of the left region, the right region, and the central region on the second sheet 164 attached onto the other surface of the substrate 150.

FIG. 6 is a block diagram illustrating a control apparatus 600 according to an embodiment of the present disclosure. The control apparatus 600 illustrated in FIG. 6 may correspond to at least one of the control apparatus 110 of FIG. 1 or the control apparatus 310 of FIG. 3 (e.g., the control apparatus 600 may be one of the control apparatus 110 and the control apparatus 310).

Referring to FIG. 6, the control apparatus 600 may include a memory 620, a processor 610, and a communication module 630. As illustrated in FIG. 6, the control apparatus 600 may communicate with the rollers and/or the sensors using the communication module 630.

Based on the wireless protocol or the wired protocol of the communication module 630, the control apparatus 600 may provide a configuration or functionality for communicating with the sensor. Additionally, based on the wireless protocol or the wired protocol of the communication module 630, the control apparatus 600 may provide a configuration or functionality for communicating with the roller.

The memory 620 may include any non-transitory computer-readable storage medium. In an embodiment, the memory 620 may include a permanent mass storage device that includes, e.g., a disk drive, a solid state drive (SSD), a flash memory, or the like. As another example, the permanent mass storage device (e.g., a ROM, a SSD, a flash memory, a disk drive, or the like) may be a separate permanent storage device distinct from the memory, and may be included in the control apparatus 600 or in an apparatus that is wired or wirelessly accessible by the control apparatus 600. Additionally, the memory 620 may store an operating system and at least one program code (e.g., a program code for calculating a dispersion and controlling a roller).

The processor 610 may be configured to process instructions stored in a computer program by performing basic arithmetic, logic, and input/output operations. The instructions may be transmitted to the rollers and/or the sensors from the memory 620 and/or the communication module 630.

The processor 610 may obtain a measured thickness for each of a plurality of portions of the sheet rolled through the plurality of rollers and calculate a dispersion for the sheet thickness based on the obtained thickness for each of the plurality of portions of the sheet. Next, the processor 610 may determine movement information of at least one target roller among the plurality of rollers based on the calculated dispersion and execute instructions for controlling the movement of the at least one target roller based on the determined movement information.

As illustrated in FIG. 6, the processor 610 may include a data collection part 612, a correction application part 614, a dispersion calculation part 616, and a roller control part 618.

The data collection part 612 may receive sensing data related to thickness from each of the plurality of sensors using the communication module 630, or the data collection part 612 may receive sensing data from the memory 620 that stores therein such sensing data. For example, the sensing data may include a thickness of the sheet. Additionally or alternatively, the sensing data may include a distance between the sensor and the sheet.

The correction application part 614 may calculate a correction value that is applied to at least one sensor. In an embodiment, the correction application part 614 may initially obtain a measured thickness of the sheet and calculate a difference between the obtained thickness of the sheet and a predetermined reference thickness of the sheet. In an embodiment, the correction application part 614 may obtain the measured thickness of the sheet from sensing data collected through the data collection part 612. Additionally, the correction application part 614 may determine a correction value based on the calculated difference.

Additionally or alternatively, the correction application part 614 may initially obtain a measured thickness of the sheet and a measured thickness of the electrode plate having the substrate. The thickness of the electrode plate may be obtained through at least one sensor. The correction application part 614 may calculate a difference between the obtained thickness of the electrode plate and a predetermined reference thickness of the electrode plate, and determine a correction value based on the calculated difference.

Based on the determined correction value, at least one of the thicknesses measured for the plurality of portions of the sheet may be corrected.

The dispersion calculation part 616 may obtain the thickness of each of the portions of the sheet from the sensing data collected by the data collection part 612 and calculate a dispersion for the sheet thickness based on the obtained thickness for each of the portions of the sheet. In an embodiment, the dispersion calculation part 616 may calculate the dispersion for the sheet thickness using the following equation 1:

<Equation 1>

$$D = Target\_t - Avg\_t - (first\_t - second\_t)$$

In the equation 1, D indicates a dispersion, and Target_t indicates a target thickness for the sheet, which may be determined and stored in advance in the control apparatus 600. Further, Avg_t indicates an average thickness of the plurality of portions of the sheet, first_t indicates a thickness of a first portion that serves as the reference for dispersion measurement, and second_t indicates a thickness of a second portion that is used to measure the dispersion. For example, the first portion may be a portion in the central region of the sheet, and the second portion may be a portion in the left regions or the right region of the sheet. As another example, the first portion may be a portion in the left region of the sheet, and the second portion may be a portion in the right region of the sheet.

The roller control part 618 may determine movement information for at least one target roller among the plurality of rollers based on the dispersion calculated by the dispersion calculation part 616. Based on the determined movement information, the roller control part 618 may further control the movement of the at least one target roller. In an embodiment, the roller control part 618 may control the movement of the at least one target roller by transmitting instructions related to the movement to the at least one target roller through the communication module 630.

In an embodiment, the roller control part 618 may determine movement information by referring to Table 1 below. The movement information may include an amount of movement and a direction of movement.

<Table 1>

| dispersion (D) | movement information |
|---|---|
| +1 $\mu$m $\leq$ D | -F $\mu$m |
| +j $\mu$m $\leq$ D $\leq$ +k $\mu$m | -E $\mu$m |
| +h $\mu$m $\leq$ D $\leq$ +i $\mu$m | -D $\mu$m |
| -f $\mu$m $\leq$ D $\leq$ +g $\mu$m | 0 $\mu$m |
| -d $\mu$m $\leq$ D $\leq$ -e $\mu$m | + C $\mu$m |
| -b $\mu$m $\leq$ D $\leq$ -c $\mu$m | + B $\mu$m |
| D $\leq$ -a $\mu$m | + A $\mu$m |

Referring to Table 1, if the dispersion D falls within a threshold range (e.g., -f $\mu$m $\leq$ D $\leq$ +g $\mu$m), the roller control part 618 control the rollers such that the rollers are not moved and remain in their current positions (i.e., movement of 0 $\mu$m). The sheet is produced by using the rollers remaining in their current positions. If the movement information determined based on the dispersion D includes a positive (+) value, the roller control part 618 may control at least one target roller to be moved in the first direction. In a case where the movement information determined based on the dispersion D includes a negative (-) value, the roller control part 618 may control at least one target roller to be moved in the second direction. The characters listed in Table 1, for example, a, b, c, d, e, f, g, h, i, j, k, l, A, B, C, D, E may be set to zero or any positive real number.

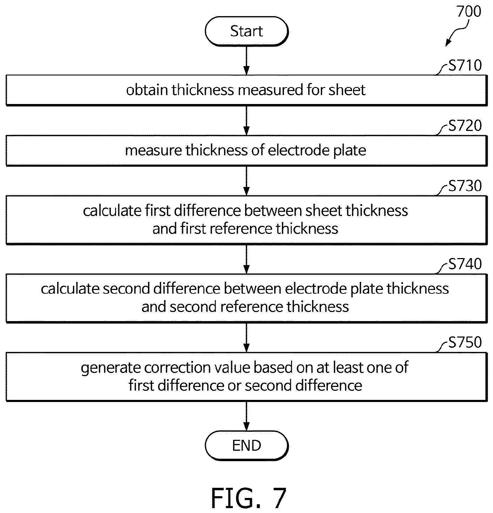

FIG. 7 is a flowchart illustrating a method 700 for generating a correction value according to an embodiment of the present disclosure. Each operation in the method 700 illustrated in FIG. 7 may be performed by the correction application part 614 illustrated in FIG. 6. For the sake of convenience of explanation, each operation in FIG. 7 will be described as being performed by the processor 610 included in the control apparatus 600 of FIG. 6. The method 700 illustrated in FIG. 7 may be a method for generating a correction value that is performed prior to controlling the movement of the rollers.

Referring to FIG. 7, the processor may obtain the thickness measured for a particular portion of the sheet by using at least one sensor (S710). In an embodiment, in a case where a plurality of sensors are used, an average value for the thickness of the sheet may be obtained as the thickness of the sheet.

Next, the processor may measure the thickness of the electrode plate by using at least one sensor (S720). For example, the thickness of the electrode plate may be obtained by adding the thickness of the first sheet attached onto the electrode plate, the thickness of the second sheet attached onto the electrode plate, and the thickness of the substrate that is determined in advance.

Next, the processor may calculate a first difference between the sheet thickness and a predetermined first reference thickness (S730). Here, the first reference thickness may refer to a reference value associated with the sheet thickness. Further, the processor may calculate a second difference between the electrode plate thickness and a predetermined second reference thickness (S740). Here, the second reference thickness may refer to a reference value associated with the electrode plate thickness.

Next, the processor may generate a correction value based on at least one of the first difference or the second difference (S750). For example, the processor may generate the correction value by applying a first weight to the first difference and a second weight to the second difference. Here, the first weight and the second weight may be predetermined or changed dynamically.

The generated correction value may then be applied to at least one of the thicknesses measured for the plurality of portions of the sheet. For example, in a case where the correction value is '+r', the first thickness measured for the first portion of the sheet may be corrected by applying the value of '+r' to the first thickness. As another example, in a case where the correction value is '-r', the second thickness measured for the second portion of the sheet may be corrected by applying the value of '-r' to the second thickness. Here, 'r' may be any positive real number.

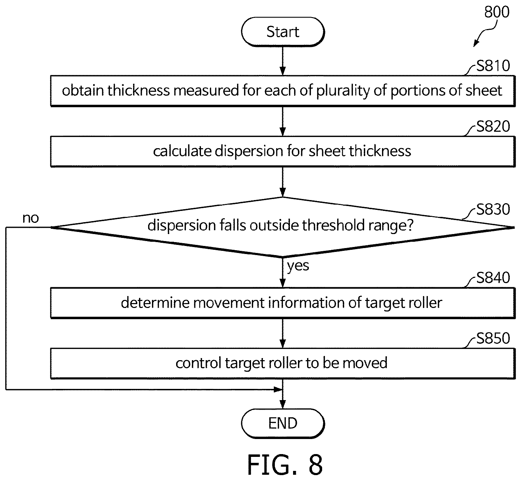

FIG. 8 is a flowchart illustrating a method 800 for controlling a thickness of a sheet in an electrode plate manufacturing process according to an embodiment of the present disclosure. Each step according to the method 800 illustrated in FIG. 8 may be performed by the dispersion calculation part 616 and the roller control part 618 illustrated in FIG. 6. For the sake of convenience of explanation, each step of FIG. 8 will be described as being performed by the processor 610 included in the control apparatus 600 of FIG. 6.

The processor may obtain a thickness measured for each of the plurality of portions of the sheet that is rolled through the plurality of rollers (S810). In an embodiment, a correction value may be applied to at least one of the thicknesses measured for the plurality of portions, thereby correcting the thickness. In an embodiment, the processor may obtain the thickness measured for each of the plurality of portions of the sheet from sensing data received from at least one sensor. For example, the processor may measure a third distance between a distance measurement sensor and a roller serving as a distance measurement target through the distance measurement sensor. Further, the processor may measure a fourth distance between the distance measurement sensor and a particular portion of a sheet placed on a surface of the roller serving as the distance measurement target through the distance measurement sensor. Thereafter, the processor may obtain a thickness of the particular portion of the sheet based on the third distance and the fourth distance. As another example, the processor may measure a fifth distance between a distance measurement sensor and a substrate serving as a distance measurement target through the distance measurement sensor. Further, the processor may measure a sixth distance between the distance measurement sensor and a particular portion of a sheet placed on a surface of the substrate through the distance measurement sensor. Thereafter, the processor may obtain a thickness of the particular portion of the sheet based on the fifth distance and the sixth distance.

Next, the processor may calculate a dispersion for the sheet thickness based on the obtained thickness of each of the plurality of portions (S820). In an embodiment, the processor may calculate an average of the obtained thicknesses of the plurality of portions, and calculate a difference between a thickness of a first portion and a thickness of a second portion among the obtained thicknesses of the plurality of portions. The processor may then calculate a dispersion for the sheet thickness based on the calculated average thickness, the difference between the thicknesses, and a predetermined target thickness. For example, the processor may calculate the dispersion for the sheet thickness using the equation 1 discussed above.

Next, the processor may determine whether the calculated dispersion falls outside a predetermined threshold range (S830).

In a case where the processor determines that the calculated dispersion falls outside the threshold range, the processor may determine movement information of at least one target roller among a plurality of rollers based on the calculated dispersion (S840). In an embodiment, the movement information may include an amount of movement and a direction of movement of the at least one target roller. For example, in a case where the calculated dispersion falls within a first range, the processor may determine a first direction as the direction of movement of the at least one target roller. As another example, in a case where the calculated dispersion falls within a second range, the processor may determine a second direction as the direction of movement of the at least one target roller. Here, the first direction may be a direction toward a position where a fixed roller is located, and the second direction may be a direction away from the position where the fixed roller is located.

Thereafter, the processor may control at least one target roller to be moved based on the determined movement information (S850). In an embodiment, the processor may control at least one target roller to be moved by the amount of movement in the direction of movement included in the movement information.

In an embodiment, the processor may determine one or more rollers of the plurality of rollers, other than the fixed roller, as at least one target roller. For example, the one or more rollers determined as the at least one target roller may include a first roller spaced apart from the fixed roller by a first distance and a second roller spaced apart from the fixed roller by a second distance that is greater than the first distance. In this case, the processor may control that the first roller is moved first and the second roller is moved subsequently based on the amount and direction of movement included in the movement information. As another example, the processor may control that the first roller and the second roller are moved simultaneously based on the amount and direction of movement included in the movement information. In this case, the first roller and the second roller may be moved by the same amount of movement in the same direction.

In some embodiments, in a case where the dispersion falls outside a threshold range, the processor may identify a pair of rollers that have the most influence on a difference in thickness between a first portion of a sheet and a second portion of the sheet. Thereafter, at least one target roller may be determined by the processor to include at least one of the identified pair of rollers. Here, the pair of rollers most responsible for the difference in thickness between the first portion of the sheet and the second portion of the sheet may be determined in association with the largest difference in thickness between the first portion and the second portion of the sheet rolled through the pair of rollers. For example, in a case where the difference in thickness between the first portion and the second portion measured from the sheet rolled through a first roller and a second roller is 'n' (where n is a natural number) and the difference in thickness between the first portion and the second portion measured from the sheet rolled through the second roller and a third roller is 'n+1', the second roller and the third roller may be determined as the pair of rollers most responsible for the difference in thickness between the first portion and the second portion of the sheet.

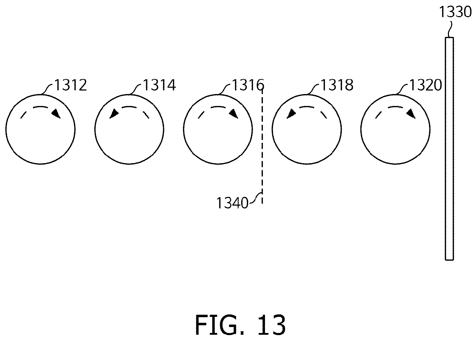

Based on the calculated dispersion, the processor may determine a direction of movement of the target rollers and determine at least one target roller with respect to the identified pair of rollers to include at least one roller located in the second direction. An example in which only some of the rollers excluding the fixed rollers are determined to be target rollers will be described later with reference to FIG. 13.

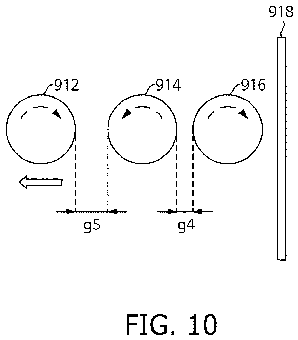

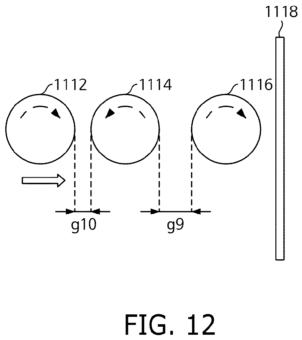

In an embodiment, after controlling the at least one target roller to move, the processor may re-obtain a thickness measured for each of the plurality of portions of the sheet rolled through the plurality of rollers, and recalculate a dispersion for the sheet thickness based on the obtained thicknesses for the plurality of portions. The processor may then identify a pair of rollers that have the most influence on the difference in thickness between the first portion of the sheet and the second portion of the sheet in a case where the recalculated dispersion falls outside the threshold range. Thereafter, the processor may control at least one of the identified pair of rollers to be moved in the first direction or the second direction. Specific examples for explaining the movement of rollers will be described below with reference to FIGS. 10 and 12.

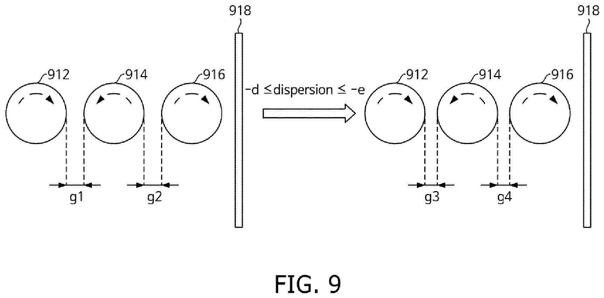

Hereinafter, various examples showing the movement of the rollers will be described with reference to FIGS. 9 to 13. While FIGS. 9 to 13 illustrate the movement of rollers through which the first sheet is rolled, similar control methods may be applied to rollers through which the second sheet is rolled.

FIG. 9 is an example diagram showing a state of rollers 912 and 914 that are moved in the first direction based on a dispersion according to an embodiment of the present disclosure. In FIG. 9, it is illustrated that the roller 916 that is positioned closest to a substrate 918 may serve as a fixed roller and the other rollers 912 and 914 may serve as movable rollers. In FIG. 9, before roller movement is performed, a distance between the first roller 912 and the second roller 914 may be set to a first distance g1, and a distance between the second roller 914 and the third roller 916 may be set to a second distance g2, and the first distance g1 may be equal to the second distance g2. Here, each of g1 to g4 may be a positive real number.

A dispersion for the sheet thickness may be calculated, and movement information may be determined based on the calculated dispersion. For example, referring to FIG. 9 and Table 1 (above), if the dispersion falls within the range from '-d' to '-e' inclusive (where d and e are positive real numbers), the movement information may be determined to include '+C $\mu$m' (where C is a positive real number) by referring to Table 1 described above.

If the movement information is determined to include '+C $\mu$m,' the first roller 912 and the second roller 914 (i.e., the movable rollers), except the fixed roller 916, are determined as target rollers, and the first roller 912 and the second roller 914 may be moved by 'C $\mu$m' in the first direction, which is a direction toward a position where the third roller 916 is located. In some embodiments, when a plurality of target rollers are moved, each target roller is moved by an amount such that the distances between each pair of target rollers is reduced by a same amount. For example, each target roller may be moved by an amount that includes the amount to be moved in the movement information in addition to the sum of amounts to be moved for each target roller that is located between the target roller and the fixed roller. As such, the separation between each of the target rollers is reduced by the same amount (e.g., so each of the first and second distances g1 and g2 is reduced by C $\mu$m). After the movement is completed, the distance between the first roller 912 and the second roller 914 may become a third distance g3, and the distance between the second roller 914 and the third roller 916 may become a fourth distance g4. For example, it is shown in FIG. 9 that the third distance g3 is equal to the fourth distance g4, and each of the third distance g3 and the fourth distance g4 is smaller than each of the first distance g1 and the second distance g2 (e.g., the third distance g3 and the fourth distance g4 may each be smaller than each of the first distance g1 and the second distance g2). With this decreased spacing between the rollers, the sheet may be rolled into a thinner sheet and the thinner sheet may discharged through a pair of rollers.

Even after the target rollers are moved, the dispersion for the sheet thickness may be calculated again. In an embodiment, the processor may re-obtain a thickness measured for each of the plurality of portions of the thinner sheet rolled through the plurality of rollers and recalculate the dispersion for the sheet thickness based on the obtained thickness for each of the plurality of portions.

FIG. 10 is an example diagram showing a state of the first roller 912 that is moved based on the recalculated dispersion according to an embodiment of the present disclosure. For example, FIG. 10 shows a state in which the first roller 912 has moved in the second direction based on the recalculated dispersion after the movement of the first roller 912 and the movement of the second roller 914 described in FIG. 9 are completed.

In an embodiment, if the recalculated dispersion falls outside a threshold range, a pair of rollers, which most significantly influences the difference in thickness between the first portion of the sheet and the second portion of the sheet, may be identified. For example, in FIG. 9, the sheet that is rolled by the first roller 912 and the second roller 914 may have the largest difference in thickness between the first portion and the second portion of the sheet. Thus, it may be determined that the first roller 912 and the second roller 914 are the pair of rollers that most significantly influences difference in thickness between the first portion and the second portion of the sheet.

Since the first roller 912 and the second roller 914 have the greatest influence on generating the difference in thickness between the first portion and the second portion of the sheet, a target roller to be moved may be determined between the first roller 912 and the second roller 914. Based on the recalculated dispersion, the movement information is determined again, and in a case where the movement information includes the second direction, the first roller 912 may be determined to be the target roller.

As illustrated in FIG. 10, as the first roller 912 is determined as the target roller, the first roller 912 may be moved in the second direction by an amount of movement included in the movement information. For example, in FIG. 10, it is illustrated that a distance g5 between the first roller 912 and the second roller 914 is greater than the distance g4 between the second roller 914 and the third roller 916. Here, each of g4 and g5 may be a positive real number.

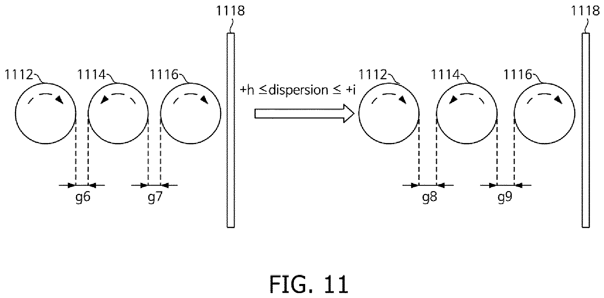

FIG. 11 is an example diagram showing a state in which rollers 1112 and 1114 are moved in a second direction according to a dispersion according to an embodiment of the present disclosure. For example, in FIG. 11, it is illustrated that a roller 1116 that is positioned closest to a substrate 1118 may serve as a fixed roller, and the other rollers 1112 and 1114 may serve as movable rollers. In FIG. 11, before roller movement is performed, a distance between the first roller 1112 and the second roller 1114 may be set to a sixth distance g6, and a distance between the second roller 1114 and the third roller 1116 serving as the fixed roller may be set to a seventh distance g, and the sixth distance g6 may be equal to the seventh distance g7. Here, each of g6 and the g7 may be a positive real number.

A dispersion for the sheet thickness may be calculated, and movement information may be determined based on the calculated dispersion. In FIG. 11, in a case where the dispersion falls within the range from '+h' to '+i' inclusive (where h and i are positive real numbers), the movement information may be determined to include '-D $\mu$m' (where D is a positive real number) by referring to Table 1 described above.

In response to the case where the movement information is determined to include '-D $\mu$m,' the first roller 1112 and the second roller 1114 (i.e., the movable rollers), except the fixed roller 1116, are determined as target rollers, and the first roller 1112 and the second roller 1114 may be moved by 'D $\mu$m' in the second direction, which is a direction away from a position where the third roller 1116 is located. After the movement is completed, the distance between the first roller 1112 and the second roller 1114 may become an eighth distance g8, and the distance between the second roller 1114 and the third roller 1116 may become a ninth distance g9. The movements of each target roller may be determined so as to set the distances between each target roller at specified values. For example, it is shown in FIG. 11 that the eighth distance g8 is equal to the ninth distance g9, each of the eighth distance g8 and the ninth distance g9 is longer than each of the sixth distance g6 and the seventh distance g7 (e.g., the eighth distance g8 and the ninth distance g9 may each be longer than each of the sixth distance g6 and the seventh distance g7). Here, each of g8 and g9 may be a positive real number. With this increased spacing between the rollers, the sheet may be rolled into a thick sheet, and the thick sheet may be discharged through a pair of rollers.

Even after the target rollers are moved, the dispersion for the sheet thickness may be calculated again.

FIG. 12 is an example diagram showing a state of the first roller 1112 that is moved based on the recalculated dispersion according to an embodiment of the present disclosure. For example, FIG. 12 shows a state in which the first roller 1112 has moved in the second direction based on the recalculated dispersion after the movement of the first roller 1112 and the movement of the second roller 1114 described in FIG. 11 are completed.

In an embodiment, if the recalculated dispersion falls outside a threshold range, a pair of rollers, which most significantly influences the difference in thickness between the first portion of the sheet and the second portion of the sheet, may be identified. For example, in FIG. 12, it may be determined that the first roller 1112 and the second roller 1114 are the pair of rollers that most significantly influences the difference in thickness between the first portion of the sheet and the second portion of the sheet.

From the first roller 1112 and the second roller 1114, a target roller to be moved may be determined. Based on the recalculated dispersion, the movement information is determined again, and in a case where the movement information includes the first direction, the first roller 1112 may be determined to be the target roller.

As illustrated in FIG. 12, as the first roller 1112 is determined as the target roller, the first roller 1112 may be moved in the first direction by an amount of movement included in the movement information. Accordingly, in FIG. 12, it is illustrated that a distance g10 between the first roller 1112 and the second roller 1114 is less than the distance g9 between the second roller 1114 and the third roller 1116. Here, each of g9 and g10 may be a positive real number.

Meanwhile, depending on the calculated dispersion, only some rollers among the movable rollers may be determined to be target rollers.

FIG. 13 is an example diagram for explaining a method of determining a target roller according to an embodiment of the present disclosure. For example, in FIG. 13, it is illustrated that a fifth roller 1320 positioned closest to a substrate 1330 may serve as a fixed roller, and the number of rollers utilized to manufacture a particular sheet may be five.

If a dispersion for the sheet thickness falls outside a threshold range, a pair of rollers that have the most influence on a difference in thickness between a first portion of the sheet and a second portion of the sheet may be identified. In FIG. 13, it is illustrated that a third roller 1316 and a fourth roller 1318 are identified as the pair of rollers most responsible for the difference in thickness between the first portion of the sheet and the second portion of the sheet.

In some embodiments, the processor may determine at least one target roller to include at least one roller located in the second direction relative to a space 1340 between the identified pair of rollers 1316 and 1318. In the example of FIG. 13, the second direction is a direction toward a first roller 1312 from the space 1340. For example, in FIG. 13, it is illustrated that the first roller 1312, a second roller 1314, and a third roller 1316 located in the second direction relative to the space 1340 between the identified pair of rollers 1316 and 1318 are determined as target rollers. The first roller 1312, the second roller 1314, and the third roller 1316 that are determined as the target rollers may be moved by an amount of movement in the first direction or the second direction included in the movement information. In the example of FIG. 13, the first direction is a direction toward the space 1340 from the first roller 1312.

The flowchart and description above are merely examples and may be implemented differently in some embodiments. For example, in some embodiments, the order of each step may be reversed, some steps may be performed repeatedly, some steps may be omitted, or some steps may be added.

The methods described above may be provided as a computer program stored in a computer-readable storage medium (e.g., memory, etc.) for execution on a computer. The medium may be a continuous storage of a computer-executable program, or it may be a temporary storage for execution or download. The medium may also be a variety of recording or storage means in the form of a single or combined piece of hardware, and may be distributed over a network, rather than being limited to a medium that is directly connected to any computer system. Examples of medium may include magnetic medium such as hard disks, floppy disks, and magnetic tapes; optical recording medium such as CD-ROMs and DVDs; magneto-optical medium such as floptical disks; and programmable memory including ROM, RAM, flash memory, and the like to store program instructions. Other examples of medium include a recording medium or a storage medium managed by app stores that distribute applications, sites that provide or distribute various other software, servers, and the like.

By way of summation and review, each secondary battery may include an electrode plate that may be composed of a first sheet attached onto one surface of a substrate and a second sheet attached onto the other surface of the substrate. In order to manufacture such an electrode plate, a dry electrode process utilizing a plurality of rollers to roll out the powder may be employed. However, if there are deviations (differences) in the thickness of the electrode plate produced through the dry electrode process, it may adversely affect the electrochemical performance and safety of the secondary battery.

In contrast, the present disclosure provides a method and an apparatus for controlling a thickness of a sheet in an electrode plate manufacturing process to achieve uniform thickness of the electrode plate. That is, the method and apparatus, according to embodiments, measure the thickness of a rolled sheet in real time in the dry plate process and automatically adjust the thickness of the sheet in accordance with the measurement.

According to embodiments of the present disclosure, the dispersion of the sheet is calculated in real time, and at least one target roller may be controlled to move in the first direction or the second direction based on the calculated dispersion of the sheet. Consequently, the spacing between a pair of rollers for rolling the sheet is adaptively adjusted for optimization, resulting in the formation of a sheet with uniform thickness on the substrate.

According to embodiments of the present disclosure, based on the dispersion of the sheet calculated in real time, the position of the rollers may be adjusted in real time. Consequently, it enables adaptive responses to various environmental changes that may occur during the electrode plate manufacturing process, minimizing the occurrence of thickness variations in the electrode plate.

According to embodiments of the present disclosure, as the thickness of the electrode plate containing the sheet becomes uniform, the electrochemical performance and safety of the secondary battery containing the electrode plate may be improved.

Although the present disclosure has been described above with respect to embodiments thereof, the present disclosure is not limited thereto. Various modifications and variations can be made thereto by those skilled in the art within the spirit of the present disclosure and the equivalent scope of the appended claims.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated.

Accordingly, it will be understood by those of skill in the art that various changes in form and details may be made without departing from the scope of the present invention as set forth in the following claims. Further Embodiments are set out in the following clauses:

Clause 1. A method for controlling a sheet thickness in an electrode plate manufacturing process, the method comprising:

obtaining a thickness measured for each of a plurality of portions of a sheet rolled through a plurality of rollers;
calculating, based on the obtained thickness for each of the plurality of portions, a dispersion for the sheet thickness;
determining, based on the calculated dispersion, movement information of at least one target roller from the plurality of rollers; and
controlling the at least one target roller to be moved based on the determined movement information.

Clause 2. The method according to clause 1, wherein:

the movement information includes an amount of movement and a direction of movement of the at least one target roller, and
controlling the at least one target roller to be moved includes controlling the at least one target roller to be moved by the amount of movement in the direction of movement that are included in the movement information.

Clause 3. The method according to clause 2, wherein determining the movement information includes:

determining the direction of movement of the at least one target roller to be a first direction in response to a case where the calculated dispersion falls in a first range, and
determining the direction of movement of the at least one target roller to be a second direction in response to a case where the calculated dispersion falls in a second range.

Clause 4. The method according to clause 3, wherein the first direction is a direction toward a position where a fixed roller among the plurality of rollers is located, and the second direction is a direction away from the position where the fixed roller is located.

Clause 5. The method according to any preceding clause, further comprising determining at least one roller of the plurality of rollers as the at least one target roller, such that the at least one roller excludes a fixed roller among the plurality of rollers.

Clause 6. The method according to clause 5, wherein:

the at least one roller determined as the at least one target roller includes a first roller 912 spaced apart from the fixed roller by a first distance and a second roller 914 spaced apart from the fixed roller by a second distance d2 that is greater than the first distance d1, and
the controlling the at least one target roller to be moved includes controlling the first roller 912 to be moved first, and controlling the second roller 914 to be moved subsequently based on the determined movement information.

Clause 7. The method according to clause 5, wherein:

the at least one roller determined as the at least one target roller includes a first roller 912 spaced apart from the fixed roller by a first distance d1 and a second roller 914 spaced apart from the fixed roller by a second distance d2 that is greater than the first distance d1, and
controlling the at least one target roller to be moved includes controlling the first roller 912 and the second roller 914 to be moved together based on the determined movement information.

Clause 8. The method according to any preceding clause, further comprising, after controlling the at least one target roller to be moved:

re-obtaining a thickness measured for each of the plurality of portions of the sheet rolled through the plurality of rollers;
recalculating, based on the re-obtained thickness for each of the plurality of portions, a dispersion for the sheet thickness;

identifying a pair of rollers that have the most influence on generating a difference in thickness between a first portion of the sheet and a second portion of the sheet in response to a case where the dispersion falls outside a threshold range; and controlling movement of at least one of the identified pair of rollers.

Clause 9. The method according to clause 8, further comprising determining the at least one target roller to include at least one of the identified pair of rollers.

Clause 10. The method according to clause 9, wherein determining the at least one target roller includes determining the at least one target roller to include at least one roller located in a second direction relative to a space between the identified pair of rollers.

Clause 11. The method according to any preceding clause, wherein obtaining the thickness measured for each of the plurality of portions of the sheet includes:

measuring a third distance d3 between a distance measurement sensor and a roller serving as a distance measurement target through the distance measurement sensor;

measuring a fourth distance d4 between the distance measurement sensor and a particular portion of the sheet placed on a surface of the roller serving as the distance measurement target through the distance measurement sensor; and

obtaining a thickness of the particular portion of the sheet based on the third distance d3 and the fourth distance d4.

Clause 12. The method according to any preceding clause, wherein obtaining the thickness measured for each of the plurality of portions of the sheet includes:

measuring a fifth distance d5 between a distance measurement sensor and a substrate serving as a distance measurement target through the distance measurement sensor;

measuring a sixth distance d6 between the distance measurement sensor and a particular portion of the sheet placed on a surface of the substrate through the distance measurement sensor; and

obtaining a thickness of the particular portion of the sheet based on the fifth distance d5 and the sixth distance d6.

Clause 13. The method according to any preceding clause, wherein calculating the dispersion for the sheet thickness includes:

calculating an average thickness of the obtained thicknesses of the plurality of portions;

calculating a difference in thickness between a first portion and a second portion among the obtained thicknesses of the plurality of portions; and

calculating the dispersion for the sheet thickness based on the calculated average thickness, the difference in thickness, and a predetermined target thickness.

Clause 14. A non-transitory computer-readable storage medium that stores therein instructions that, if executed by a computer, cause the computer to perform the method according to any preceding clause.

Clause 15. A control apparatus 600 for controlling a sheet thickness in an electrode plate manufacturing process, the control apparatus comprising:

a memory 620; and

at least one processor 610 connected to the memory and configured to execute at least one computer-readable program stored in the memory, the at least one computer-readable program including instructions, if executed by the at least one processor, is configured to perform operations of:

obtaining a thickness measured for each of a plurality of portions of a sheet rolled through a plurality of rollers;

calculating, based on the obtained thickness for each of the plurality of portions, a dispersion for the sheet thickness;

determining, based on the calculated dispersion, movement information of at least one target roller from the plurality of rollers; and

controlling the at least one target roller to be moved based on the determined movement information.

Claims

1. A method for controlling a sheet thickness in an electrode plate manufacturing process, the method comprising:

   obtaining a thickness measured for each of a plurality of portions of a sheet rolled through a plurality of rollers;
   calculating, based on the obtained thickness for each of the plurality of portions, a dispersion for the sheet thickness;
   determining, based on the calculated dispersion, movement information of at least one target roller from the plurality of rollers; and
   controlling the at least one target roller to be moved based on the determined movement information.

2. The method as claimed in claim 1, wherein:

   the movement information includes an amount of movement and a direction of movement of the at least one target roller, and
   controlling the at least one target roller to be moved includes controlling the at least one target roller to be moved by the amount of movement in the direction of movement that are included in the movement information.

3. The method as claimed in claim 2, wherein determining the movement information includes:

   determining the direction of movement of the at least one target roller to be a first direction in response to a case where the calculated dispersion falls in a first range, and
   determining the direction of movement of the at least one target roller to be a second direction in response to a case where the calculated dispersion falls in a second range.

4. The method as claimed in claim 3, wherein the first direction is a direction toward a position where a fixed roller among the plurality of rollers is located, and the second direction is a direction away from the position where the fixed roller is located.

5. The method as claimed in any preceding claim, further comprising determining at least one roller of the plurality of rollers as the at least one target roller, such that the at least one roller excludes a fixed roller among the plurality of rollers.

6. The method as claimed in claim 5, wherein:

   the at least one roller determined as the at least one target roller includes a first roller spaced apart from the fixed roller by a first distance and a second roller spaced apart from the fixed roller by a second distance that is greater than the first distance, and
   the controlling the at least one target roller to be moved includes controlling the first roller to be moved first, and controlling the second roller to be moved subsequently based on the determined movement information.

7. The method as claimed in claim 5, wherein:

   the at least one roller determined as the at least one target roller includes a first roller spaced apart from the fixed roller by a first distance and a second roller spaced apart from the fixed roller by a second distance that is greater than the first distance, and
   controlling the at least one target roller to be moved includes controlling the first roller and the second roller to be moved together based on the determined movement information.

8. The method as claimed in any preceding claim, further comprising, after controlling the at least one target roller to be moved:

   re-obtaining a thickness measured for each of the plurality of portions of the sheet rolled through the plurality of rollers;
   recalculating, based on the re-obtained thickness for each of the plurality of portions, a dispersion for the sheet thickness;
   in response to a case where the dispersion falls outside a threshold range, determining for each pair of rollers of the plurality of rollers a difference in thickness between a first portion of the sheet and a second portion of the sheet rolled through the pair of rollers;
identifying the pair of rollers for which the difference in thickness is largest; and
controlling movement of at least one of the identified pair of rollers.

9. The method as claimed in claim 8, further comprising determining the at least one target roller to include at least one of the identified pair of rollers.

10. The method as claimed in claim 9, wherein determining the at least one target roller includes determining the at least one target roller to include at least one roller located in a second direction relative to a space between the identified pair of rollers.

11. The method as claimed in any preceding claim, wherein obtaining the thickness measured for each of the plurality of portions of the sheet includes:

measuring a third distance between a distance measurement sensor and a roller serving as a distance measurement target through the distance measurement sensor;
measuring a fourth distance between the distance measurement sensor and a particular portion of the sheet placed on a surface of the roller serving as the distance measurement target through the distance measurement sensor; and
obtaining a thickness of the particular portion of the sheet based on the third distance d3 and the fourth distance.

12. The method as claimed in any preceding claim, wherein obtaining the thickness measured for each of the plurality of portions of the sheet includes:

measuring a fifth distance between a distance measurement sensor and a substrate serving as a distance measurement target through the distance measurement sensor;
measuring a sixth distance between the distance measurement sensor and a particular portion of the sheet placed on a surface of the substrate through the distance measurement sensor; and
obtaining a thickness of the particular portion of the sheet based on the fifth distance d5 and the sixth distance d6.

13. The method as claimed in any preceding claim, wherein calculating the dispersion for the sheet thickness includes:

calculating an average thickness of the obtained thicknesses of the plurality of portions;
calculating a difference in thickness between a first portion and a second portion among the obtained thicknesses of the plurality of portions; and
calculating the dispersion for the sheet thickness based on the calculated average thickness, the difference in thickness, and a predetermined target thickness.

14. A non-transitory computer-readable storage medium that stores therein instructions that, if executed by a computer, cause the computer to perform the method as claimed in any preceding claim.

15. A control apparatus for controlling a sheet thickness in an electrode plate manufacturing process, the control apparatus comprising:

a memory; and
at least one processor connected to the memory and configured to execute at least one computer-readable program stored in the memory, the at least one computer-readable program including instructions, if executed by the at least one processor, is configured to perform operations of:

obtaining a thickness measured for each of a plurality of portions of a sheet rolled through a plurality of rollers;
calculating, based on the obtained thickness for each of the plurality of portions, a dispersion for the sheet thickness;
determining, based on the calculated dispersion, movement information of at least one target roller from the plurality of rollers; and
controlling the at least one target roller to be moved based on the determined movement information.

FIG. 1

FIG. 2

FIG. 3

FIG. 4

EP 4 542 662 A1

FIG. 5

23

control apparatus <u>600</u>

processor <u>610</u>

/612

data collection part

/620

memory

/614

correction application part

/630

communication module

/616

dispersion calculation part

/618

roller control part

FIG. 6

700

Start

S710

obtain thickness measured for sheet

S720

measure thickness of electrode plate

S730

calculate first difference between sheet thickness
and first reference thickness

S740

calculate second difference between electrode plate thickness
and second reference thickness

S750

generate correction value based on at least one of
first difference or second difference

END

FIG. 7

800

Start

S810

obtain thickness measured for each of plurality of portions of sheet

S820

calculate dispersion for sheet thickness

S830

no ◇ dispersion falls outside threshold range?

yes

S840

determine movement information of target roller

S850

control target roller to be moved

END

FIG. 8

FIG. 9

FIG. 10

FIG. 11

FIG. 12

FIG. 13

## EUROPEAN SEARCH REPORT

Application Number

EP 24 19 8869

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/394246 A1 (TERASAWA FUMIHIRO [JP] ET AL) 23 December 2021 (2021-12-23) * paragraphs [0016], [0027], [0029], [0033], [0052], [0077], [0081], [0082], [0097] * * claim 1 * * figures 1-3, 5, 6 * | 1,12,14, 15 | INV. H01M4/04 H01M4/139 B30B3/04 |
| X | EP 3 996 164 A1 (VOLKSWAGEN AG [DE]) 11 May 2022 (2022-05-11) * paragraphs [0079] - [0082] * * figures 1,2 * | 1-10, 12-15 | |
| X | JP 2018 129283 A (TOYOTA MOTOR CORP) 16 August 2018 (2018-08-16) * paragraphs [0102] - [0159] * * figures 4-14 * | 1-5,8-15 | |

TECHNICAL FIELDS SEARCHED (IPC)

H01M
B30B

The present search report has been drawn up for all claims

| Place of search | Date of completion of the search | Examiner |
|---|---|---|
| The Hague | 30 January 2025 | Järvi, Tommi |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 8869

30-01-2025

| Patent document cited in search report | Publication date | Patent family member(s) | | Publication date |
|---|---|---|---|---|
| US 2021394246 A1 | 23-12-2021 | CN | 112912185 A | 04-06-2021 |
| | | JP | 7316589 B2 | 28-07-2023 |
| | | JP | WO2020100561 A1 | 30-09-2021 |
| | | US | 2021394246 A1 | 23-12-2021 |
| | | WO | 2020100561 A1 | 22-05-2020 |
| EP 3996164 A1 | 11-05-2022 | CN | 114454534 A | 10-05-2022 |
| | | DE | 102020214052 A1 | 12-05-2022 |
| | | EP | 3996164 A1 | 11-05-2022 |
| JP 2018129283 A | 16-08-2018 | JP | 6780599 B2 | 04-11-2020 |
| | | JP | 2018129283 A | 16-08-2018 |
| | | KR | 20180092282 A | 17-08-2018 |

EPO FORM P0459